# EUROPÄISCHE PATENTSCHRIFT

(11) **EP 1 269 500 B1**
(45) Veröffentlichungstag und Bekanntmachung des Hinweises auf die Patenterteilung: **10.01.2007**
(21) Anmeldenummer: 01907574.6
(22) Anmeldetag: 01.03.2001
(51) Int. Cl.: H01H 9/00, H01H 47/00, H01H 3/26

(54) **VERFAHREN ZUR STEUERUNG EINES MOTORANTRIEBES FÜR EINEN STUFENSCHALTER SOWIE FÜR EIN SOLCHES VERFAHREN GEEIGNETER STUFENSCHALTER**
METHOD FOR THE CONTROL OF A MOTOR DRIVE FOR A STEPPING SWITCH AND A STEPPING SWITCH SUITABLE FOR SUCH A PROCESS
PROCEDE DE COMMANDE D'UN MOTEUR POUR UN COMMUTATEUR ROTATIF ET UN COMMUTATEUR ROTATIF APPROPRIE AUDIT PROCEDE

(30) Priorität: 01.04.2000 DE 10016489
(43) Veröffentlichungstag der Anmeldung: 02.01.2003
(73) Patentinhaber: Maschinenfabrik Reinhausen GmbH, 93059 Regensburg (DE)
(72) Erfinder: ACH, Jürgen, 93059 Regensburg (DE); HEUDECKER, Christian, 93197 Zeitlarn (DE); HOEPFL, Klaus, 93142 Maxhütte-Haidhof (DE); WREDE, Silke, 93197 Zeitlarn (DE)
(86) Internationale Anmeldenummer: PCT/EP2001/002303
(87) Internationale Veröffentlichungsnummer: WO 2001/075919

(56) Entgegenhaltungen:
- DE-C- 19 707 548
- FR-A- 2 662 559
- US-A- 2 790 860
- US-A- 5 736 827

## Beschreibung

Die Erfindung betrifft ein Verfahren zur Steuerung eines Motorantriebes für einen Stufenschalter. Die Erfindung betrifft weiterhin einen für ein solches Verfahren besonders geeigneten Stufenschalter. Ein Motorantrieb der genannten Art ist aus der DE 197 07 548 C1 sowie der Firmenschrift "Motorantrieb ED - Betriebsanleitung; Druckimpressum BA 138/02de" der Anmelderin bekannt.

Ein solcher bekannter Motorantrieb dient zur unterbrechungslosen Umschaltung eines Stufenschalters zwischen verschiedenen Anzapfungen der Regelwicklung eines Stufentransformators. Die Betätigung des Stufenschalters wird also durch eine Betätigung des Motorantriebes eingeleitet; die Steuerung des Motorantriebes erfolgt dabei nach dem Prinzip der Schrittschaltung, d. h. ein Verstellvorgang um einen Schaltschritt wird durch einen einmaligen Steuerimpuls - beispielsweise durch einen Spannungsregler ausgelöst - eingeleitet und danach zwangsläufig zu Ende geführt. Die nächste Schaltung ist dann erst wieder nach erreichter neuer Ruhestellung möglich.

Ein bekannter Motorantrieb weist dazu neben anderen Baugruppen zu seiner Steuerung ein Steuergetriebe auf, das verschiedene Nockenscheiben zur mechanischen Betätigung unterschiedlicher Nockenschalter trägt. Bei jeder Betätigung des Stufenschalters, d. h. jedem Umschaltvorgang, vollzieht das Steuergetriebe und vollziehen damit die einzelnen Nockenscheiben eine Drehung um 360 Grad und betätigen ihrerseits nach einer vorab durch die Gestaltung der Nocken festgelegten Sequenz die unterschiedlichen Nockenschalter. Die einzelnen Nockenschalter ihrerseits dienen dabei zur Realisierung der unterschiedlichsten Funktionen; beispielsweise wird die Laufzeit, d. h. das Abschalten des Motorantriebes, durch einen solchen Nockenschalter festgelegt.

Beim bekannten Motorantrieb erfolgt dessen Steuerung derart, dass nach einem vorbestimmten Zeitpunkt innerhalb der Umschaltsequenz, der durch die entsprechende Nockenscheibe vorbestimmt ist, der Motorantrieb abgeschaltet wird. Dies geschieht dadurch, dass durch diese Nockenscheibe ein korrespondierender Nockenschalter betätigt wird und der Motorantrieb dadurch die Information erhält, dass diese Umschaltsequenz abgeschlossen ist und der Motorantrieb abgeschaltet werden soll und damit nachfolgend wieder für die nächste Umschaltung bereit ist. Diese Information bezieht sich aber ausdrücklich nur auf den Motorantrieb, d. h. dessen Status und seine abgeschlossene Betätigung; es ist keinerlei Überwachung möglich, ob auch der entsprechende Stufenschalter tatsächlich seine neue Endposition erreicht hat und alle Bauteile des Stufenschalters den neuen stationären Zustand auch tatsächlich eingenommen haben, der Voraussetzung für einen ordnungsgemäßen Betrieb und vor allem auch für eine weitere Umschaltung ist.

Aufgabe der Erfindung ist es demnach, ein Verfahren zur Steuerung eines Motorantriebes anzugeben, bei dem auf einfache Weise sowohl dessen Laufzeit gesteuert als auch gleichzeitig eine Überwachung möglich ist, ob auch der betätigte Stufenschalter seinerseits seine ordnungsgemäße stationäre neue Position nach der Umschaltung eingenommen hat. Aufgabe der Erfindung ist es weiterhin, einen für ein solches Verfahren besonders geeigneten Stufenschalter anzugeben.

Diese Aufgabe wird erfindungsgemäß durch ein Verfahren mit den Merkmalen des ersten Patentanspruches gelöst. Der Patentanspruch 2 betrifft einen dafür besonders geeigneten Stufenschalter.

Die Erfindung geht ganz allgemein davon aus, dass üblicherweise ein Stufenschalter einen langsam und kontinuierlich betätigbaren Wähler zur leistungslosen Vorwahl der neuen Anzapfung, auf die umgeschaltet werden soll, sowie einen Lastumschalter zur schnellen, unterbrechungslosen Umschaltung zwischen bisheriger und neuer Anzapfung besitzt. Der Lastumschalter weist dabei einen Kraftspeicher auf, der während der Betätigung des Wählers aufgezogen wird, wobei durch Klinken ein Abtriebsteil des Kraftspeichers noch arretiert wird. Die eigentliche Betätigung des Lastumschalters wird dann durch den auslösten Kraftspeicher, genauer gesagt durch die schnelle Betätigung dessen Abtriebsteils, eingeleitet. Diese schnelle Betätigung des Abtriebsteils des Kraftspeichers seinerseits wird dadurch freigegeben, dass eine der Klinken aus der stationären Arretierungsposition ausgelenkt wird; die bis dahin bestehende Verklinkung des Kraftspeichers wird aufgehoben. Nach Abschluss der Betätigung des Lastumschalters, wenn der Stufenschalter insgesamt die neue Betriebsstellung erreicht hat, rastet die entsprechende Klinke am Kraftspeicher wieder ein, verklinkt diesen wiederum, und der Stufenschalter ist bereit für die nächste Umschaltung. Ein solcher bekannter Stufenschalter ist beispielsweise in der DE 198 47 745 C1 beschrieben. Ein entsprechender Kraftspeicher allein ist detailliert in der DE 198 55 860 C1 beschrieben.

Der Erfindung liegt die allgemeine Idee zugrunde, diese Verklinkung, d. h. die Stellung der Klinken des Kraftspeichers, die diesen normalerweise im arretierten Zustand halten, zu erfassen und auf doppelte Weise auszunutzen. Einerseits soll der Zeitpunkt, an dem eine Klinke am Kraftspeicher, die bis dahin arretiert ist, ausgelenkt wird und damit den Kraftspeicher bzw. dessen Abtriebsteil freigibt, als Zeitpunkt zur Abschaltung des Motorantriebes erfasst und genutzt werden - denn damit wird die Umschaltsequenz beendet. Zum anderen stellt die Verklinkung des Kraftspeichers nach Erreichen der neuen Position ein zuverlässiges Indiz für einen definierten, betriebssicheren Zustand dar. Im Gegensatz dazu ist in anderen Fällen, falls der Kraftspeicher nicht wieder verklinkt wird, ein unzulässiger Betriebszustand erreicht. Ein solcher Fehler bei der Verklinkung kann auftreten, wenn eine Feder der Klinken selbst oder die Feder des Kraftspeichers defekt ist bzw. sind. Durch Erfassung des Status des ordnungsgemäßen Wiederverklinkens nach vollzogener Lastumschaltung ist somit gleichzeitig eine Überwachung des Stufenschalters möglich.

Die Erfindung soll nachfolgend anhand von Zeichnungen beispielhaft noch näher erläutert werden.

Es zeigen:

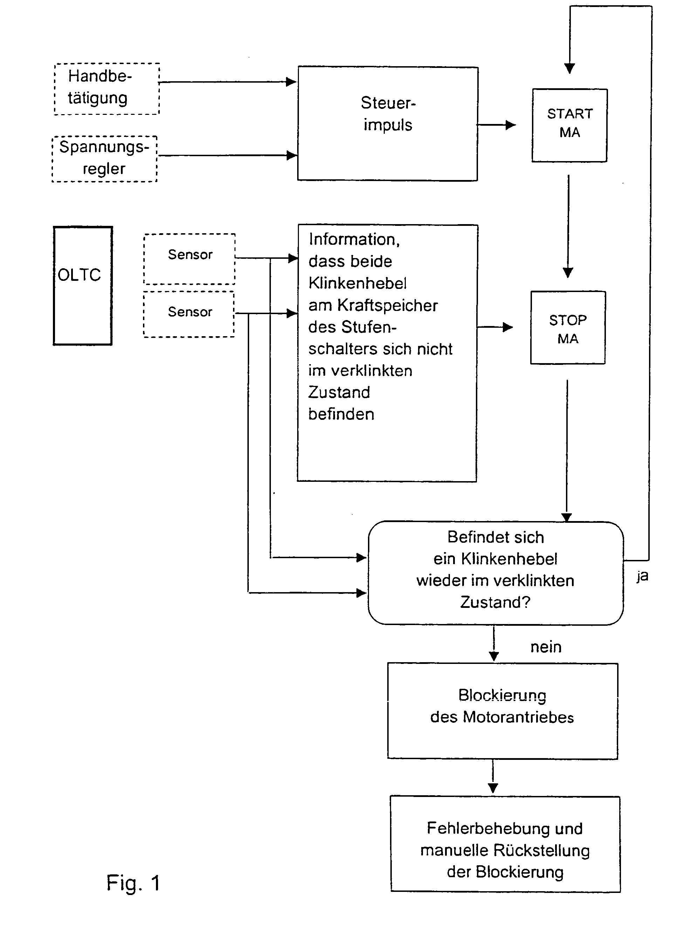

- Fig. 1: das erfindungsgemäße Verfahren in schematischer Darstellung des Ablaufes
- Fig. 2: den Kraftspeicher eines zur Durchführung des Verfahrens besonders geeigneten Stufenschalters
- Fig. 3: Diagramm einer vollständigen Umschaltsequenz.

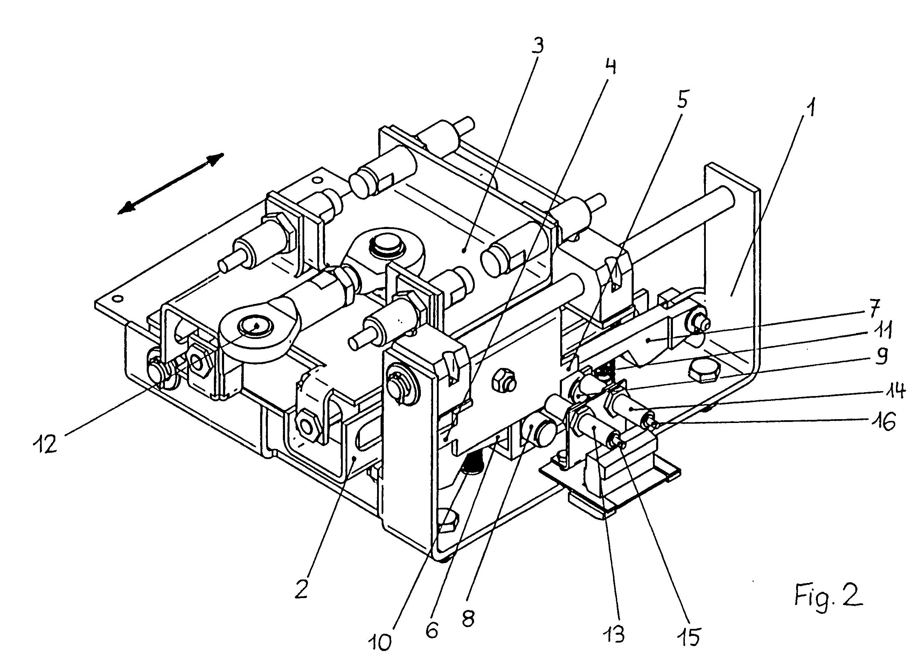

Zunächst soll das erfindungsgemäße Verfahren erläutert werden, wobei im Vorgriff auf die später folgende detaillierte Beschreibung des Kraftspeichers auf einige von dessen Bauteilen Bezug genommen wird. Die Betätigung des Stufenschalters wird eingeleitet z. B. durch einen Steuerimpuls eines Spannungsreglers bei Abweichung des (gemessenen) Spannungsistwertes vom Spannungssollwert oder auch durch manuelle Impulsgabe in einer Schaltwarte o. dgl. Dieser Steuerimpuls betätigt je nach Drehrichtung, d. h. Schalten in Richtung "Höher" oder in Richtung "Tiefer", einen von zwei Motorschützen und damit den Elektromotor des Motorantriebes. Jeder der beiden Motorschütze verfügt dabei über eine bekannte Selbsthaltung. Durch diese Betätigung des Elektromotors des Motorantriebes dreht sich die zum Stufenschalter führende Antriebswelle und betätigt damit den Stufenschalter. Dabei erfolgt zum einen eine langsame, leistungslose Vorwahl des Wählers des Stufenschalters; die beweglichen Wählerkontakte erreichen die neuen festen Wählerkontakte, auf die umgeschaltet werden soll. Gleichzeitig erfolgt ein Spannen, d. h. Aufziehen des Kraftspeichers des Stufenschalters. Ein solcher Kraftspeicher ist in Fig. 2 dargestellt und wird später noch einmal detailliert erläutert. Beim Spannen des Kraftspeichers wird ein Aufziehschlitten 2 relativ zu einem Schaltschlitten 3 bewegt, dabei werden zwischen den beiden Schlitten angeordnete Kraftspeicherfedern gespannt. Der Schaltschlitten 3 ist dabei durch Klinkenhebel 6, 7, die in Arretierungsansätze 4, 5 eingreifen, noch arretiert. Ist der volle Aufzug des Kraftspeichers erreicht, d. h. der Aufziehschlitten 2 maximal hin zum Schaltschlitten 3 bewegt und die Kraftspeicherfedern maximal gespannt, wird der jeweilige arretierende Klinkenhebel 6, 7 ausgelenkt. Der Schaltschlitten 3 wird sprungartig bewegt; die Kraftspeicherfedern entspannen sich. Bei seiner sprungartigen Bewegung betätigt der Schaltschlitten 3 damit den Lastumschalter des Stufenschalters, der die eigentliche Lastumschaltung zwischen den festen Wählerkontakten vornimmt. Diese Auslenkung des jeweiligen Klinkenhebels 6, 7 wird beim erfindungsgemäßen Verfahren erfasst. Die Information, dass eine solche Auslenkung erfolgt ist, führt zur Stillsetzung des Motorantriebes; der Umschaltvorgang ist damit abgeschlossen. Nach einer gewissen Zeit, wenn sich der Stufenschalter im neuen, stationären Zustand befindet, wird dann noch geprüft, ob der Kraftspeicher wieder verklinkt ist und sich damit im ordnungsgemäßen Zustand befindet und bereit ist für die nächste Betätigung des Stufenschalters. Dazu erfolgt eine Kontrolle, ob jeweils einer der beiden Klinkenhebel 6, 7 wieder arretiert ist. Jeweils einer deshalb, weil der Kraftspeicher zwei solcher Klinkenhebel 6, 7 aufweist, von denen jeweils einer abwechselnd, d. h. nach jeder Schaltung alternierend, jeweils in der linken oder der rechten von zwei möglichen Positionen des Kraftspeichers dessen Schaltschlitten 3 arretiert.

Falls keiner der beiden Klinkenhebel 6, 7 sich in Arretierstellung befindet, ist der Kraftspeicher nicht verklinkt; es liegt ein Fehler vor, der zu einer Blockierung des Motorantriebes führt, so dass keine weiteren Schaltungen mehr möglich sind und Folgeschäden vermieden werden. Zunächst muss in jedem Fall der beschriebene Fehler, der zur Nichtverklinkung geführt hat, behoben werden.

In Fig. 2 ist ein Kraftspeicher eines zur Durchführung des vorstehend beschriebenen Verfahrens geeigneten Stufenschalters dargestellt. Auf bestimmte Einzelteile dieses Kraftspeichers wurde bereits weiter oben bei der Erläuterung des Verfahrens Bezug genommen. Der Kraftspeicher besteht aus drei Hauptbaugruppen: einer Grundplatte 1, einem Aufziehschlitten 2 und einem Schaltschlitten 3. Dieser Aufbau ist aus dem eingangs zitierten Stand der Technik bereits bekannt. Der Aufziehschlitten 2 wird vom Motorantrieb linear betätigt; er ist längs verschiebbar ausgebildet. Zwischen ihm und dem Schaltschlitten 3 sind - in der Figur nicht dargestellte - Kraftspeicherfedern angeordnet. Seitlich besitzt der Schaltschlitten 3 Arretierungsansätze 4, 5. Ferner sind zwei seitliche Klinkenhebel 6, 7 vorgesehen, die jeweils eine Arretierungsrolle 8, 9 aufweisen, die wiederum jeweils mit einem der Arretierungsansätze 4, 5 korrespondieren, d. h. in diesen einrasten können. Der Aufziehschlitten 2 wird, wie erläutert, bei Betätigung des Motorantriebes also in Längsrichtung verschoben, während der Schaltschlitten 3 in seiner bisherigen Position verharrt, weil er durch die Arretierungsrollen 8 bzw. 9 der beschriebenen Klinkenhebel 6 bzw. 7, die sich gegen den entsprechenden korrespondierenden Arretierungsansatz 4 bzw. 5 abstützen, verriegelt ist. Erreicht der Aufziehschlitten 2 nach seiner Längsbewegung die Endposition, so wird je nach Bewegungsrichtung einer der Klinkenhebel 3 oder 4 gegen die Kraft einer entsprechenden Klinkenhebelfeder 10 bzw. 11 nach unten gedrückt. In der Folge gerät die jeweilige Arretierungsrolle 8 oder 9 außer Eingriff mit dem jeweiligen Arretierungsansatz 4 oder 5. Die Arretierung des Schaltschlittens 3 wird damit aufgehoben und dieser folgt sprungartig der Bewegung des Aufziehschlittens 2 nach, dabei entspannen sich die Kraftspeicherfedern und die Arretierungsrollen 8 oder 9 gehen in der neuen Endposition des Schaltschlittens 3 wieder in Eingriff mit dem korrespondierenden Arretierungseinsatz 3 oder 4 - die Arretierung ist wieder hergestellt. Bei der nächsten Betätigung des Stufenschalters erfolgt der gleiche Vorgang in entgegengesetzter Richtung. Es wird also immer abwechselnd der Aufziehschlitten 2 nach links oder rechts bewegt und der Schaltschlitten 3 folgt nach Aufhebung seiner Arretierung, die ihn zunächst festhält, dann jeweils dieser Bewegung nach. Diese Bewegung wird dann durch ein Koppelglied 12 zur Betätigung des Lastumschalters weitergeleitet.

Seitlich neben den Arretierungsrollen 8, 9 der Klinkenhebel 6, 7 sind erfindungsgemäß Näherungssensoren 13, 14 vorgesehen. Diese Näherungssensoren 13, 14 erfassen jeweils die Lage des entsprechenden, räumlich zugeordneten Klinkenhebels 6, 7. Im hier dargestellten Beispiel erfasst der Näherungssensor 13 die Lage des Klinkenhebels 6 und der Näherungssensor 14 die Lage des Klinkenhebels 7.

Der jeweilige Näherungssensor 13, 14 gibt ein elektrisches Signal, wenn sich der entsprechende Klinkenhebel 6, 7 im verklinkten Zustand befindet. Jede der von einem Näherungssensor 13, 14 herausgeführten Signalleitungen 15, 16 steht mit einem Klinkenüberwachungsschütz elektrisch in Verbindung. Deren Schaltkontakte sind parallel in den elektrischen Steuerkreis des Elektromotors des Motorantriebes geschaltet. Der Motorantrieb läuft nach gesetztem Steuerimpuls also nur so lange, wie eines der beiden Klinkenüberwachungsschütze angezogen ist, was voraussetzt, dass einer der Näherungssensoren 13, 14 das Signal liefert und damit die Information gibt, dass der entsprechende Klinkenhebel 6, 7 eingerastet ist. Wird der Kraftspeicher jedoch ausgelöst, sind beide Klinkenhebel 6, 7 kurzzeitig aus der Arretierung gedrückt, beide Klinkenüberwachungsschütze sind abgefallen, in der Folge wird der Steuerkreis unterbrochen und der Motorantrieb stillgesetzt.

Im Regelfall ist, wie bereits beschrieben, nach Abschluss der Lastumschaltung der Kraftspeicher wieder verklinkt, d. h. der Steuerkreis ist wieder für einen neuen Steuerimpuls initialisiert. Im Fehlerfall, wenn keine Arretierung erfolgt ist, bleiben beide Klinkenüberwachungsschütze abgefallen, und es ist nicht möglich, über einen neuen Steuerimpuls eine weitere Umschaltung, d. h. neuerliche Betätigung des Stufenschalters zu beginnen. Vielmehr bleibt der Motorantrieb blockiert, so lange dieser Fehler nicht beseitigt ist.

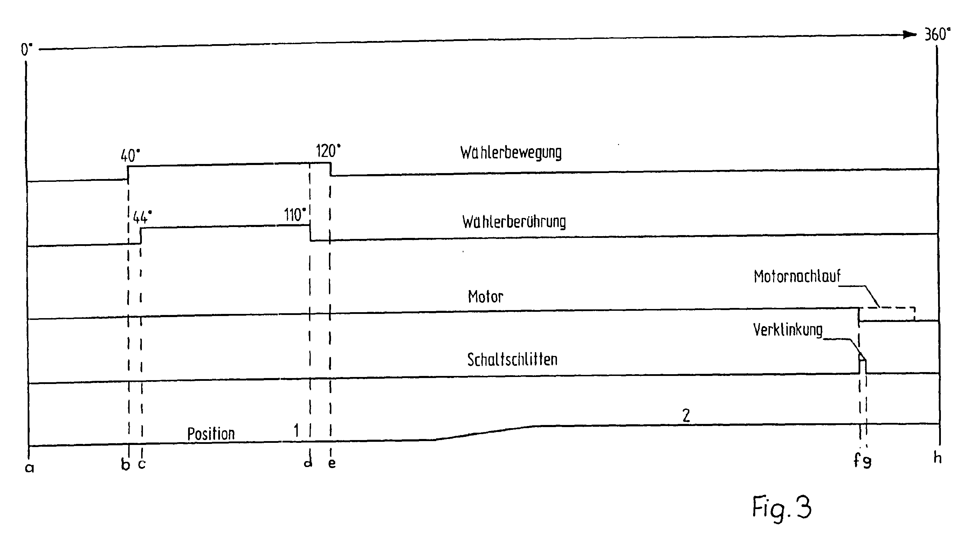

In Fig. 3 ist eine Umschaltsequenz des Stufenschalters, d. h. eine vollständige Umschaltung von einer ersten Position 1 zu einer zweiten Position 2, dargestellt. Dabei vollführt die Antriebswelle des Motorantriebes eine Drehung von 360 Grad. Die charakteristischen Zeitpunkte innerhalb dieser Umschaltsequenz sind gekennzeichnet:
- a: Ausgangsposition; der Motorantrieb wird durch einen Steuerimpuls gestartet.
- b: Die beweglichen Wählerkontakte beginnen sich zu bewegen.
- c: Der bewegliche Wählerkontakt verlässt den alten festen Wählerkontakt.
- d: Der bewegliche Wählerkontakt erreicht den neuen festen Wählerkontakt.
- e: Die Bewegung der beweglichen Wählerkontakte ist abgeschlossen, der Kraftspeicher wird noch weiter aufgezogen.
- f: Der Kraftspeicher ist maximal aufgezogen; der den Schaltschlitten verklinkende Klinkenhebel wird ausgelenkt und gibt den Schaltschlitten frei, der sich sprungartig bewegt und den Lastumschalter betätigt. Gleichzeitig wird diese Auslenkung durch die Näherungssensoren 13 bzw. 14 erfasst, beide Klinkenüberwachungsschütze sind abgefallen, der Motorantrieb wird abgeschaltet.
- g: Die Lastumschaltung ist beendet, der Stufenschalter hat seine neue stationäre Position erreicht, der Kraftspeicher ist wieder verklinkt.
- h: Die Umschaltung ist abgeschlossen.

Dargestellt ist in dieser Figur auch noch der auftretende Motornachlauf des Motorantriebes; nach der elektrischen Abschaltung kommt, bedingt durch die Massenträgheit der von ihm bewegten Bauteile, der Motorantrieb erst nach einer gewissen Zeit tatsächlich zum Stillstand.

## Patentansprüche

1. Verfahren zur Steuerung eines Motorantriebes für einen Stufenschalter,
wobei durch einen einmaligen Steuerimpuls die Betätigung des Motorantriebes gestartet und nach dem Prinzip der Schrittschaltung zwangsläufig zu Ende geführt wird,
wobei der Motorantrieb einen Wähler des Stufenschalters langsam und leistungslos betätigt,
wobei der Motorantrieb weiterhin einen Aufziehschlitten (2) eines aus diesem und einem Schaltschlitten (3) bestehenden Kraftspeichers aufzieht und spannt und wobei der Schattschlitten (3) durch Klinkenhebel (6, 7) zunachst arretiert ist und sich im verklinkten Zustand befindet,
und wobei schließlich nach vollem Aufzug des Kraftspeichers die Verklinkung durch Freigabe der Klinkenhebe (6, 7) aufgehoben wird, derart, dass der Schaltschlitten (3) eine schnelle, einen Lastumschalter des Stufenschalters betätigende Bewegung vollführt
**dadurch gekennzeichnet,**
**dass** die Stellung der Klinkenhebel (6, 7) überwacht wird und der Motorantrieb abgeschaltet wird, sobald sich alle Klinkenhebel (6, 7) im nicht verklinkten Zustand befinden,
und **dass** der Motorantrieb erst wieder unter der Voraussetzung, dass einer der Klinkenhebel (6, 7) sich wieder im verklinkten Zustand befindet, für die nachfolgende Betätigung freigegeben wird.

2. Stufenschalter zur Durchführung des Verfahrens gemäß Patentanspruch 1,
der einen Kraftspeicher aufweist, der seinerseits wiederum einen von einer Antriebswelle des Motorantriebes linear betätigbaren Antriebsschlitten und einen verklinkbaren Schaltschlitten (3) aufweist, zwischen denen Kraftspeicherfedern vorgesehen sind,
wobei durch Längsbewegung des Aufziehschlittens (2) relativ zum Schaltschlitten (3) hin die Kraftspeicherfedern spannbar sind, derart, dass nach Freigabe der Verklinkung der Schaltschlitten (3) sprungartig der Bewegung des Aufziehschlittens (2) nachfolgt,
und wobei die Verklinkung durch zwei gegen die Kraft jeweils einer Klinkenhebelfeder (10, 11) auslenkbare Klinkenhebel (6, 7) mit jeweils einer Arretierungsrolle (8, 9) erfolgt, die im Ruhezustand mit jeweils einem Arretierungsansatz (4, 5) am Schaltschlitten korrespondieren und an diesem verklinkt sind,
**dadurch gekennzeichnet,**
**dass** seitlich im Bereich der Arretierungsrollen (8, 9) jedes Klinkenhebels (6, 7) jeweils ein elektrischer Näherungssensor (13, 14) angeordnet ist,
und **dass** jeder Näherungssensor (13, 14) mit dem Steuerkreis des Motorantriebes elektrisch in Verbindung steht, derart, dass der Steuerkreis unterbrochen und damit der Motorantrieb stillgesetzt ist, so bald sich nicht einer der Klinkenhebel (6, 7) im verklinkten Zustand befindet.

## Claims

1. Process for control of a motor drive unit for a tap-changer,
wherein operation of the motor drive unit is started through a single control pulse and forcefully carried out to completion according to the principle of step-by-step operation,
wherein the motor drive unit actuates a tap selector on the tap-changer slowly and at no load,
wherein the motor drive unit further charges and loads a winding-up slide (2) in an energy accumulator consisting of said winding-up slide and a switching slide (3) and wherein the switching slide (3) is initially locked in position by ratchet levers (6,7) and is in a latched condition,
and wherein finally, after full charging of the energy accumulator, the latching is deactivated through release of the ratchet levers (6,7) in such a manner that the switching slide (3) completes a rapid movement which actuates a diverter switch on the tap-changer,
**characterised by**
the fact that the positioning of the ratchet levers (6,7) is monitored and the motor drive unit is switched off as soon as all ratchet levers (6,7) are in unlatched condition,
and the fact that the motor drive unit is only released again for the next operation under the condition that one of the ratchet levers (6,7) is again in a latched condition.

2. A tap-changer for carrying out the process according to claim 1,
which exhibits an energy accumulator, which, for its part, in turn exhibits a drive slide which can be linearly actuated by a drive shaft on the motor drive unit and a latching switching slide (3), between which energy accumulator springs are provided,
wherein through motion of the winding-up slide (2) along its longitudinal axis towards the switching slide (3), the energy accumulator springs can be loaded in such a manner that upon release of the latching, the switching slide (3) abruptly follows the motion of the winding-up slide (2),
and wherein the latching occurs through two ratchet levers (6,7), each of which can be swung out in opposition of the force exerted by one of the ratchet lever springs (10,11) and possesses a stop roller (8,9) and which corresponds to and is latched onto one of the stop lugs (4,5) on the switching slide (3) when in a neutral state,
**characterised by**
the fact that on the side in the region of the stop roller (8,9) of each of the ratchet levers (6,7) is situated an electrical proximity sensor (13,14),
and the fact that each proximity sensor (13,14) is connected electrically with the control circuit of the motor drive unit in such a manner that the control circuit is interrupted and hence the motor drive unit is stopped as soon as one of the ratchet levers (6,7) is not in a latched condition.

## Revendications

1. Processus de commande du mécanisme d'entraînement d'un changeur de prises, par lequel une seule impulsion de commande lance l'activation du mécanisme d'entraînement qui se poursuit obligatoirement jusqu'à la fin selon le principe de l'entraînement intermittent, où le mécanisme d'entraînement active un sélecteur du changeur de prises lentement et sans capacité, où également le mécanisme d'entraînement arme et bande un chariot tendeur (2) d'un accumulateur d'énergie composé de ce dernier et d'un chariot de commutation (3) et où le chariot de commutation (3) est d'abord bloqué par les leviers du cliquet (6, 7) puis se retrouve à l'état enclenché, et où enfin après armement complet de l'accumulateur d'énergie, l'enclenchement est levé après libération des leviers de cliquet (6, 7), à la suite de quoi le chariot de commutation accomplit un mouvement rapide actionnant un commutateur du changeur de prises, **se caractérisant par le fait que** la position des leviers du cliquet (6, 7) est surveillée et le mécanisme d'entraînement est coupé, dès lors que tous les leviers de cliquet (6, 7) se trouvent à l'état non enclenché, et de manière que le mécanisme d'entraînement ne soit autorisé pour la prochaine activation qu'à la condition qu'un des leviers du cliquet (6, 7) soit enclenché.

2. Changeur de prises pour la réalisation du processus selon la revendication 1, qui présente un accumulateur d'énergie, qui à son tour présente un chariot d'entraînement à commande linéaire entraîné par l'arbre de transmission du mécanisme d'entraînement et un chariot de commutation (3) à encliquetage entre lesquels des ressorts accumulateurs d'énergie sont prévus,
où, par un mouvement longitudinal du chariot tendeur (2) relativement au chariot de commutation (3), les ressorts accumulateurs d'énergie sont extensibles, de manière que le chariot de commutation (3) suive par bond, après libération de l'enclenchement, le mouvement du chariot tendeur (2),
et où l'enclenchement se fait par deux leviers de cliquet (6, 7) qui peuvent se désaxer contre la force d'un ressort de cliquet chacun (10, 11) avec chacun un galet d'arrêt (8, 9), qui au repos correspondent chacun avec une pièce d'arrêt (4, 5) sur le chariot de commutation et sont enclenchés sur ce dernier, ceci **se caractérisant par le fait que**, latéralement dans la zone des galets d'arrêt (8, 9) de chaque levier du cliquet (6, 7) un capteur d'approche électrique (13, 14) est monté,
et que chaque capteur d'approche (13, 14) est relié électriquement au circuit de contrôle du mécanisme d'entraînement, de façon que le circuit soit interrompu et par là le mécanisme d'entraînement arrêté, dès lors qu'aucun des leviers du cliquet (6, 7) ne se trouve à l'état enclenché.
